# EUROPÄISCHE PATENTANMELDUNG

(11) **EP 0 961 380 A2**
(43) Veröffentlichungstag der Anmeldung: **01.12.1999**
(21) Anmeldenummer: 99107487.3
(22) Anmeldetag: 29.04.1999
(51) Int. Cl.: H02H 3/087

(54) **Schutzschaltungsanordnung zum Auftrennen eines Gleichstromkreises**

(30) Priorität: 29.05.1998 DE 19824269
(71) Anmelder: Alstom Anlagen und Antriebssysteme GmbH, 12277 Berlin (DE)
(72) Erfinder: Roland, Jakob Dr., 12524 Berlin (DE); Nahrstaedt, Manfred Dr., 14163 Berlin (DE); Walper, Peter, 12159 Berlin (DE)
(74) Vertreter: Schäfer, Wolfgang, Dipl.-Ing.

(57) **Zusammenfassung**

Die Erfindung betrifft eine Schutzschaltungsanordnung zum Auftrennen eines Gleichstromkreises, wobei eine einfache, preisgünstige und kompakte Bauweise dadurch gegeben ist, daß als Trennmittel ein erster Wechselstromschalter(5) vorgesehen ist, zu dem ein Strompfad (6) mit einer Sicherung (7) und vorzugsweise einem zweiten Wechselstromschalter (8) parallel geschaltet ist.

## Beschreibung

Die Erfindung betrifft eine Schutzschaltungsanordnung zum Auftrennen eines Gleichstromkreises. Gleichstromkreise, die nur zur Schutzzwecken , z.B. zur Verhinderung einer Brandgefahr bei einem defekten Bauelement, abgeschaltet werden müssen, sind dazu entweder mit einem entsprechenden Gleichstromschalter ausgestattet oder werden durch eine auf das gesamte Gerät- und nicht nur den defekten Gleichstromkreis - wirkende Sicherung abgeschaltet. Der Nachteil ersterer Lösung besteht darin, daß Gleichstromschaltgeräte sehr aufwendig und teuer sind, während bei letzterer Variante die Verfügbarkeit der Anlage sinkt, wobei eine Fehlerortung entsprechend schwierig ist.

Ein spezielles Einsatzgebiet einer solchen Schutzschaltung besteht bei einem Antrieb mehrachsiger Werkzeugmaschinen mittels einzelner Achssteller. Im Bremsbetrieb wird dabei Energie in einen Zwischenkreiskondensator geladen, so daß seine Spannung ansteigt. Um die Bauteile vor Überspannung zu schützen, wird parallel zum Zwischenkreis ein Widerstand geschaltet und dadurch ein Teil der Bremsenergie in Wärme umgesetzt. Der Widerstand wird immer dann zugeschaltet, wenn die Zwischenkreisspannung einen bestimmten Wert übersteigt, so daß sich eine bestimmte Schaltfrequenz ergibt. Man spricht deshalb auch von einem gepulsten Bremswiderstand oder von einem Brems-Chopper. Die Zuschaltung des Choppers erfolgt über einen Leistungshalbleiter, z.B. über einen IGBT. Ein Problem besteht bei defektem IGBT, weil dann wegen Brandgefahr eine unverzügliche Abschaltung des Gleichspannungszwischenkreises erfolgen muß.

Im Hinblick auf den Massencharakter derartiger Schutzschaltungen und gestiegener Anforderungen an Sicherheitsstandards besteht die Aufgabe, einen kompakteren und preisgünstigeren Schaltungsaufbau für Schutzschaltungen universeller Anwendbarkeit anzugeben.

Erfindungsgemäß erfolgt die Abschaltung des Gleichspannungskreises gemäß den kennzeichnenden Merkmalen des Anspruchs 1, indem ein erster Wechselstromschalter mit parallel geschalteter Sicherung als Trennmittel verwendet wird.

Wechselstromschalter, insbesondere Drehstromschütze, welche wesentlich kompakter und preisgünstiger sind als Gleichstromschalter, haben in der Regel nur ein sehr begrenztes Schaltvermögen für Gleichstrom. Die Ursache dafür liegt darin begründet, daß der beim Öffnen des Schaltkontaktes entstehende Lichtbogen nicht wie bei Wechselstrom im natürlichen Nulldurchgang des Stromes verlischt. Damit kein Lichtbogen entsteht, muß für die Zeitspanne, in der sich die Schaltkontakte aus der geschlossenen in die offene Schalterstellung bewegen, ein Bypass zum Schutzkontakt geschaffen werden, wobei eine Sicherung nach vollständigem Öffnen der Schutzkontakte den Strom selbsttätig unterbricht. Ein auf diese Weise geschalteter Drehstromschutz kann im Havariefall einen Gleichstromkreis abschalten. Der Nennstrom der Sicherung muß dem kleinsten im Stromkreis fließenden Gleichstrom entsprechen, um sicherzustellen, daß die Sicherung bereits bei kleinsten Strömen durchbrennt.

Zusätzlich kann in Reihe zur Sicherung ein auf den Nennstrom der Sicherung ausgelegter zweiter Wechselstromschalter vorgesehen sein. Ein solcher als Trenner ohne Abschaltvermögen wirkender Wechselstromschalter bewirkt eine Trennung der Last bei abgeschaltetem Hauptschütz von dem Stromkreis. Der zweite Wechselstromschalter wird von dem ersten Wechselstromschalter (Hauptschütz) erst dann geöffnet, wenn dieser geöffnet ist und die Sicherung durchgebrannt ist.

Nachfolgend wird die Erfindung anhand eines figürlich dargestellten Ausführungsbeispiels näher erläutert.

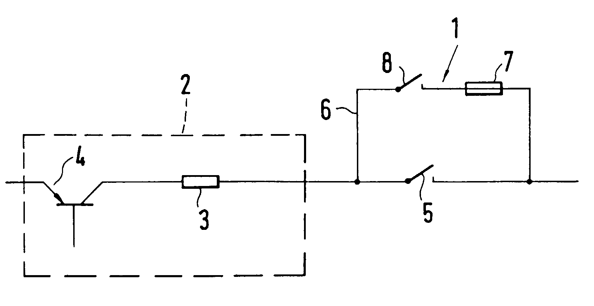

Die Figur zeigt eine Schutzschaltungsanordnung 1 in Verbindung mit einer Brems-Chopper-Baugruppe 2, die in einem Gleichstromkreis angeordnet ist. Die Brems-Chopper-Baugruppe 2 besteht im wesentlichen aus einem Bremswiderstand 3 und einem diesen taktweise schaltenden Leistungshalbleiter 4. Bei Zerstörung des Leistungshalbleiters 4 in einer größeren Anlage kann die Anlage weiter betrieben werden. Jedoch muß der dem defekten Leistungshalbleiter 4 zugeordnete Bremswiderstand 3 unverzüglich abgeschaltet werden, da er sonst einen Brand hervorrufen kann. Dazu ist die Schutzschaltungsanordnung 1 vorgesehen. Die Schutzschaltungsanordnung 1 weist einen ersten Wechselstromschalter 5, z.B. ein GS-Schütz auf, welches einen oder mehrere parallele Kontakte besitzt die seriell zur Brems-Chopper-Baugruppe 2 angeordnet sind. Der erste Wechselstromschalter 5 ist bypassartig von einem Strompfad 6 mit einer Sicherung 7 und einem zweiten Wechselstromschalter 8 überbrückt. In einem Havariefall muß der Gleichstromkreis geöffnet werden, d.h. der erste Wechselstromschalter 5 wird aus der geschlossenen in die offene Schalterstellung bewegt. Der Schalterstrom kommutiert auf den parallelen Strompfad 6 mit der Sicherung 7, so daß keine Spannung am sich öffnenden Kontakt des ersten Wechselstromschalters 5 induziert wird und letztlich die Entstehung eines Lichtbogen verhindert wird. Die Sicherungscharakteristik ist derart gewählt, daß die Schmelzzeit der Sicherung 7 größer ist als die Zeit, die der erste Wechselstromschalter 5 zum vollständigen Öffnen benötigt. Nach Ablauf der Schmelzzeit ist der Strompfad 6 aufgetrennt. Sicherheitshalber wird diese Stromkreisunterbrechung durch den zweiten Wechselstromschalter 8 unterstützt. Dieser zweite Wechselstromschalter 8, der auf den Nennstrom der Sicherung 7 ausgelegt ist, wird von dem ersten Wechselstromschalter 5 dann betätigt, wenn der Wechselstromschalter 5 vollständig geöffnet und die Sicherung 7 durchgebrannt ist.

Die Erfindung beschränkt sich nicht auf das vorstehend angegebene Ausführungsbeispiel. Vielmehr ist eine Anzahl von Varianten möglich, welche auch bei grundsätzlich anders gearteter Ausführung von den Merkmalen der Erfindung Gebrauch machen.

## Patentansprüche

1. Schutzschaltungsanordnung zum Auftrennen eines Gleichstromkreises, dadurch gekennzeichnet, daß als Trennmittel ein erster Wechselstromschalter (5) vorgesehen ist, zu dem ein Strompfad (6) mit einer Sicherung (7) parallel geschaltet ist.

2. Schutzschaltungsanordnung nach Anspruch 1, dadurch gekennzeichnet, daß in Reihe zur Sicherung (7) ein zweiter Wechselstromschalter (8), geschaltet ist, der nur dann geöffnet werden kann, wenn der erste Wechselstromschalter (5) geöffnet ist.

3. Schaltungsanordnung nach einem der vorangehenden Ansprüche gekennzeichnet durch die Anwendung zur Sicherheitsabschaltung einer Brems-Chopper-Baugruppe (1), die in einem Gleichstromkreis angeordnet ist.
